# EUROPÄISCHE PATENTANMELDUNG

(11) **EP 3 712 547 A1**
(43) Veröffentlichungstag der Anmeldung: **23.09.2020**
(21) Anmeldenummer: 19181933.3
(22) Anmeldetag: 24.06.2019
(51) Int. Cl.: F26B 25/12

(54) **TEMPERIERVORRICHTUNG ZUM TEMPERIEREN VON GEGENSTÄNDEN**

(30) Priorität: 25.06.2018 DE 102018115234
(71) Anmelder: Eisenmann SE, 71032 Böblingen (DE)
(72) Erfinder: Moll, Mathias, 71093 Weil im Schönbuch (DE); Erhardt, Reiner, 70178 Stuttgart (DE); Günter, Eberhard, 72202 Nagold (DE)
(74) Vertreter: Ostertag & Partner Patentanwälte mbB

(57) **Zusammenfassung**

Eine Temperiervorrichtung zum Temperieren, insbesondere zum Trocknen, von Gegenständen (12), insbesondere von Fahrzeugkarosserien (16), umfasst ein Gehäuse (18), in dem eine Kühlzone (22) mit einem Kühlraum (24) untergebracht ist, der eine Längsrichtung (27) definiert. Dem Kühlraum (24) ist wenigstens eine Kühlluft-Temperiereinrichtung (70) zugeordnet, mittels welcher temperierte Kühlluft erzeugbar ist, die dem Kühlraum (24) zuführbar ist. In Längsrichtung umfasst die Kühlzone (22) an einer Längsseite des Kühlraumes (24) einen Versorgungsraum (52a, 52b), in dem die Kühlluft-Temperiereinrichtung (70) angeordnet ist.

## Beschreibung

Die Erfindung betrifft eine Temperiervorrichtung zum Temperieren, insbesondere zum Trocknen, von Gegenständen, insbesondere von Fahrzeugkarosserien, mit
a) einem Gehäuse, in dem eine Kühlzone mit einem Kühlraum untergebracht ist, der eine Längsrichtung definiert;
   wobei
b) dem Kühlraum wenigstens eine Kühlluft-Temperiereinrichtung zugeordnet ist, mittels welcher temperierte Kühlluft erzeugbar ist, die dem Kühlraum zuführbar ist.

In solchen vom Markt her bekannten Anlagen werden insbesondere frisch lackierte Fahrzeugkarosserien, aber auch Teile von Fahrzeugkarosserien oder andere Gegenstände, getrocknet. Derartige Trockner haben üblicherweise eine Trockenzone, in der unter anderem Luft aus einem üblicherweise als Temperiertunnel ausgebildeten Temperierraum und meist aus gegenüber der Gesamtlänge des Temperiertunnels kurzen Tunnelabschnitten abgesaugt, in einem Heizaggregat mittels eines Wärmetauschers aufgeheizt und dem Temperiertunnel oder entsprechenden Tunnelabschnitten wieder in einem Kreislauf zugeführt wird. Nach der Heizzone schließt sich eine Kühlzone der eingangs genannten Art an, in welcher die Gegenstände mit Hilfe der durch die Kühlluft-Temperiereinrichtung erzeugten Kühlluft abgekühlt werden.

Die Kühlluft-Temperiereinrichtung ist Teil einer Kühltechnik, die verhältnismäßig viel Bauraum benötigt und mit der dafür gesorgt werden muss, dass alle Bereiche des Kühlraumes effektiv und symmetrisch mit Kühlluft versorgt werden können. Daher ist die Kühltechnik bei bekannten Anlagen mittig über den zu versorgenden Räumen angeordnet, so dass ein symmetrischer Strömungsverlauf sichergestellt ist. Hierdurch ist wird jedoch viel Bauraum in die Höhe benötigt.

In jüngerer Zeit besteht vermehrt der Wunsch, entsprechende Temperiervorrichtungen möglichst flach zu halten, da diese in bestehende Anlagenhallen integriert werden sollen.

Es ist daher Aufgabe der Erfindung, eine Temperiervorrichtung der eingangs genannten Art bereitzustellen, welche diesen Gedanken Rechnung trägt.

Diese Aufgabe wird bei einer Temperiervorrichtung der eingangs genannten Art dadurch gelöst, dass
c) die Kühlzone in Längsrichtung an einer Längsseite des Kühlraumes einen Versorgungsraum umfasst, in dem die Kühlluft-Temperiereinrichtung angeordnet ist.

Erfindungsgemäß wurde erkannt, dass auch bei einer seitlichen Anordnung von wesentlichen Komponenten der Kühltechnik, vor allem der Kühlluft-Temperiereinrichtung, eine homogene Zufuhr der Kühlluft in den Kühlraum sichergestellt werden kann. Dies gelingt sogar dann, wenn nur an einer Längsseite des Kühlraumes ein solcher Versorgungsraum vorgesehen ist, wobei es einerseits ausreichend sein kann, dass Kühlluft nur an einer Seite in den Kühlraum eingeblasen wird, und es andererseits auch gelingt, auf der gegenüberliegenden Seite des Kühlraumes Kühlluft mit der gewünschten Homogenität bezogen auf die Temperatur und das Strömungsverhalten einzublasen.

Für eine gut Verteilung der Kühlluft ist es vorteilhaft, wenn der Versorgungsraum einen Konditionierraum und einen damit strömungstechnisch verbundenen Druckraum umfasst, wobei die Kühlluft-Temperiereinrichtung in einem Aggregatbereich des Konditionierraums angeordnet und an ihrer Ausgangsseite strömungstechnisch mit dem Druckraum verbunden ist, wobei der Druckraum zwischen dem Kühlraum und dem Konditionierraum angeordnet ist und durch eine oder mehrere Einblasdüsen strömungstechnisch mit dem Kühlraum verbunden ist.

Es ist günstig, wenn der Konditionierraum einen Ansaugbereich umfasst, mit dem die Eingangsseite der Kühlluft-Temperiereinrichtung strömungstechnisch verbunden ist und dem Luft zuführbar ist. Bei dieser zugeführten Luft kann es sich vor allem um Außenluft, aber auch um umgewälzte Abluft aus dem Kühlraum oder um ein Gemisch aus solcher Abluft und Außenluft handeln.

Um die Reinheit der in den Kühlluft eingeblasenen Kühlluft zu gewährleisten, sind vorzugsweise zwischen dem Konditionierraum und dem Druckraum eine oder mehrere Filtereinheiten angeordnet, die von der temperierten Kühlluft durchströmbar sind.

Eine homogene Verteilung der von der Kühlluft-Temperiereinrichtung kommenden Kühlluft kann erreicht werden, wenn der Konditionierraum einen Abgabebereich umfasst, mit dem die Ausgangsseite der Kühlluft-Temperiereinrichtung verbunden ist und der insbesondere durch eine Filterwand, welche eine oder mehrere Filtereinheiten umfasst, von dem Druckraum getrennt ist.

Der Kühlraum kann effektiv mit Kühlluft beaufschlagt werden, wenn sich der Druckraum in Längsrichtung weitgehend über die Länge des Kühlraumes erstreckt.

Vorteilhaft ist in dem Versorgungsraum wenigstens ein Gebläse angeordnet, durch welches Luft zur Kühlluft-Temperiereinrichtung, durch die Kühlluft-Temperiereinrichtung hindurch und hiernach als temperierte Kühlluft in den Kühlraum förderbar ist.

Die Luft kann effektiv gekühlt werden, wenn die Kühlluft-Temperiereinrichtung eine Wärmetauscheranordnung umfasst.

Dabei ist es besonders günstig, wenn die Wärmetauscheranordnung einen Heißwasser-Wärmetauscher und einen Kaltwasser-Wärmetauscher umfasst oder als kombinierter Wärmetauscher für Heißwasser und Kaltwasser ausgebildet ist. Bei der Wärmetauscheranordnung können anstelle von Wasser auch andere fluide Wärmeträger verwendet werden; die Begriffe Warmwasser-Wärmetauscher und Kaltwasser-Wärmetauscher spiegeln lediglich die Temperierwirkung der jeweiligen Wärmetauscher wider.

Die Kühlzone kann vor Ort besonders effektiv montiert und installiert werden, wenn der Kühlraum mit Hilfe von einem oder mehreren Kühlzonenmodulen aufgebaut ist, von denen wenigstens eines als Aggregatmodul, in dem die Kühlluft-Temperiervorrichtung unterbringbar ist, und/oder wenigstens eines als Abgabemodul mit dem Abgabebereich und/oder wenigstens eines als Ansaugmodul mit dem Ansaugbereich ausgebildet ist.

Insbesondere strömungstechnisch ist es von Vorteil, wenn auf beiden Seiten des Kühlraumes ein Versorgungsraum mit einigen oder allen der oben erläuterten Eigenschaften und Komponenten ausgebildet ist.

Nachfolgend werden Ausführungsbeispiele der Erfindung anhand der Zeichnungen näher erläutert. In diesen zeigen:
- Figur 1: schematisch eine perspektivische Ansicht einer Kühlzone eines Trockners zum Trocknen von Gegenständen, wobei die Kühlzone einen Kühltunnel und auf jeder Längsseite des Kühltunnels einen Versorgungsraum aufweist, über welche durch ein Temperieraggregat temperierte Luft in den Kühltunnel eingeblasen werden kann;
- Figur 2: eine perspektivische Ansicht eines Abschnitts des Trockners, bei welchem ein Fördersystem detaillierter veranschaulicht ist;
- Figur 3: eine Draufsicht auf den Kühltunnel mit Blickrichtung auf die Ebene III in Figur 1, wobei einer der beiden Versorgungsräume einen Aggregatraum definiert, in dem eine Kühlluft-Temperiereinrichtung angeordnet ist;
- Figur 4: einen Längsschnitt der Kühlzone entlang der Schnittlinie IV-IV in Figur 3;
- Figur 5: einen Längsschnitt der Kühlzone entlang der gewinkelten Schnittlinie V-V in Figur 3;
- Figur 6: einen Querschnitt der Kühlzone entlang der Schnittlinie VI-VI in Figur 3;
- Figur 7: einen Querschnitt der Kühlzone entlang der Schnittlinie VII-VII in Figur 3;
- Figur 8: einen Querschnitt der Kühlzone entlang der Schnittlinie VIII-VIII in Figur 3;
- Figur 9: einen Querschnitt einer abgewandelten Kühlzone, bei welcher beide Versorgungsräume einen Aggregatraum umfassen;
- Figur 10: einen Querschnitt einer abgewandelten Kühlzone, bei welcher die Versorgungsräume unterschiedlich ausgebildet sind;
- Figur 11: einen Querschnitt einer abgewandelten Kühlzone, bei welcher lediglich auf einer Längsseite ein Versorgungsraum vorgesehen ist.

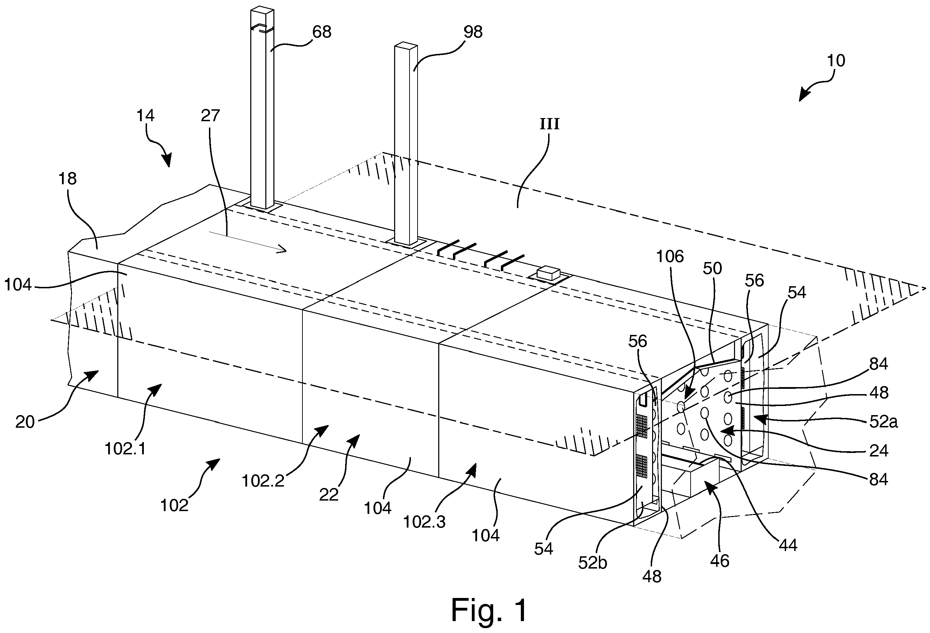

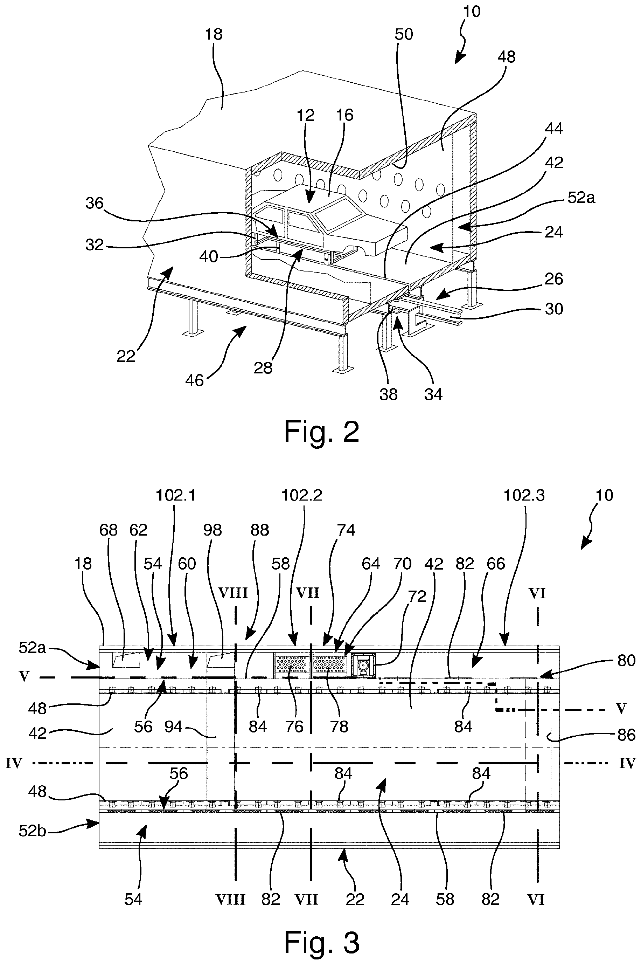

In Figur 1 ist mit 10 insgesamt eine Temperiervorrichtung zum Temperieren von in den Figuren 2 und 6 bis 11 gezeigten Werkstücken 12 bezeichnet. Als Beispiel für eine solche Temperiervorrichtung 10 ist ein Trockner 14 gezeigt. Als Beispiel für Werkstücke 12 ist in den Figuren 2 und 6 bis 11 eine Fahrzeugkarosserie 16 gezeigt; bei den Werkstücken 12 kann es sich aber auch um andere Werkstücke und insbesondere um Anbau- oder Aufbauteile von Fahrzeugkarosserien 16 wie Stoßfänger, Seitenspiegel oder dergleichen handeln. Kleinere Werkstücke 12 können gegebenenfalls auf einem nicht eigens gezeigten Werkstückträger angeordnet werden.

Der Trockner 14 umfasst ein thermisch isolierendes Trocknergehäuse 18, in dem eine lediglich in Figur 1 angedeutete Trockenzone 20 mit einem nicht zu erkennenden Trockentunnel und eine in den Figuren gezeigte Kühlzone 22 mit einem Kühlraum untergebracht sind, der bei den vorliegenden Ausführungsbeispielen in Form eines Kühltunnels 24 ausgebildet ist. Die zu trocknenden Werkstücken 12 werden im Durchlauf von einem Tunneleingang zu einem Tunnelausgang des Trocknergehäuses 18 gefördert, die in den Figuren nicht zu erkennen sind.

In der Trockenzone 20 werden die Werkstücke 12 in an und für sich bekannter Art und Weise mit konditionierter erhitzter Luft beaufschlagt und auf eine Temperatur erwärmt, bei welcher der gewünschte Trockenvorgang abläuft. Üblicherweise hat die erhitzte Luft eine Temperatur zwischen 120°C und 180°C, insbesondere beim Trocknen von Lacken. Beim Trocknen von beispielsweise Verklebungen kann die Temperatur der erhitzten Luft auch darunter liegen und zum Beispiel lediglich 80°C bis 100°C betragen. Im Anschluss an die Trockenzone 20 gelangen die Werkstücke 12 in die Kühlzone 22, in welcher sie von der Temperatur, mit welcher die Werkstücke 12 die Trockenzone 18 verlassen, auf eine demgegenüber niedrigere Temperatur abgekühlt werden.

Die Werkstücke 12 werden mit einem Transportsystem 26 in einer nur in Figur 1 veranschaulichten Förderrichtung, die einer durch den Kühltunnel 24 definierten Längsrichtung 27 entspricht, durch den Trockner 14 gefördert, wobei das Transportsystem 26 nur in Figur 2 veranschaulicht ist.

Das Transportsystem 26 umfasst eine Vielzahl von Transportwagen 28, von denen in Figur 2 nur einer zu erkennen ist und auf denen die Werkstücke 12 transportiert werden. Die Transportwagen 28 werden auf einem Schienensystem mit einer Tragschiene 30 verfahren, welche in an und für sich bekannter Weise als I-Profil ausgebildet und am Boden verankert ist. Die somit bodengebundene Tragschiene 30 ist einspurig. Alternativ kann auch ein mehrspuriges, insbesondere zweispuriges Schienensystem vorhanden sein.

Der Transportwagen 28 umfasst eine Befestigungseinrichtung 32, an welcher eine Fahrzeugkarosserie 16 oder ein entsprechender Werkstückträger für Werkstücke 12 befestigt werden kann. Beim vorliegenden Ausführungsbeispiel ist die Befestigungseinrichtung 32 zur Aufnahme von Fahrzeugkarosserien 16 konzipiert. Hierfür umfasst die Befestigungseinrichtung 32 ein Tragprofil 34 mit in Figur 2 nicht zu erkennenden Lagerbolzen, welche in an und für sich bekannter Art und Weise mit Gegenelementen an der Fahrzeugkarosserie 16 zusammenarbeiten, so dass die Fahrzeugkarosserie 16 an der Befestigungseinrichtung 32 fixiert werden kann. Die Befestigungseinrichtung 32 kann auch mehrere Sätze von solchen Lagerbolzen aufweisen, die an unterschiedliche Fahrzeugkarosserien 16 mit verschiedenen Abmessungen und Ausgestaltungen angepasst sind, so dass die Befestigungseinrichtung 32 flexibel für unterschiedliche Fahrzeugkarosserietypen genutzt werden kann.

Der Transportwagen 28 umfasst ein Transportwagen-Fahrwerk 34, welches auf der Tragschiene 30 abläuft und die Befestigungseinrichtung 32 lagert. Das Transportwagen-Fahrwerk 34 ist über eine Verbindungseinrichtung 36 mit der Befestigungseinrichtung 32 gekoppelt. Die Kopplung ist derart eingerichtet, dass der Transportwagen 28 in der Lage ist, auch Kurvenabschnitte der Tragschiene 30 zu durchfahren. Hierzu kann das Transportwagen-Fahrwerk 34 beispielsweise eine Vorläufereinheit und eine Nachläufereinheit umfassen, die gelenkig miteinander verbunden sind, wobei in Figur 2 nur eine Vorläufereinheit 38 teilweise zu erkennen ist.

Beim vorliegenden Ausführungsbeispiel umfasst die Verbindungseinrichtung 36 zwei vertikale Gelenkstreben 40, welche die Vorläufereinheit 38 und die Nachläufereinheit mit der Befestigungseinrichtung 32 koppeln. Die Gelenkstreben 40 ermöglichen es durch ein nicht eigens gekennzeichnetes Gelenk, dass die Befestigungseinrichtung 32 um eine vertikale Drehachse gegenüber der Vorläufereinheit 38 und der Nachläufereinheit verschwenken kann.

Die Transportwagen 28 führen jeweils ein eigenes Antriebssystem mit sich, so dass die Transportwagen 28 unabhängig voneinander angetrieben und verfahren werden können. Neben solchen Transportwagen 28 mit eigenem Antriebssystem können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 28 können dann entsprechend auch unabhängig von anderen Antriebseinrichtungen angetrieben und verfahren werden.

Bei hier nicht eigens gezeigten Abwandlungen können auch andere Fördersysteme vorgesehen sein, wie sie an und für sich bekannt sind. Hierfür sind insbesondere beispielsweise Rollenbahnförderer, Kettenförderer, Riemen- oder Bandförderer sowie auf andere Weise als oben beschrieben ausgebildete Schienensysteme oder dergleichen geeignet, die intermittierend oder kontinuierlich betrieben werden können.

Wie in Figur 2 zu erkennen ist, ist der Kühltunnel 24 unten durch einen Tunnelboden 42 begrenzt. Der Tunnelboden 42 weist einen zu der Verbindungseinrichtung 36 der Transportwagen 26 komplementären Verbindungsdurchgang 44 auf, der zu einem unterhalb des Kühltunnels 24 angeordneten Fahrraum 46 für das Transportwagen-Fahrwerk 34 führt, in welchem das Schienensystem mit der Tragschiene 30 untergebracht ist. Der Trockner 14 ist im Bereich der Trockenzone 20 mit dem Trockentunnel strukturell entsprechend ausgebildet.

Bei der Einfahrt eines mit einem Werkstück 12 beladenen Transportwagens 28 in den Trockner 14 wird die Verbindungseinrichtung 36 des Transportwagens 28 also gleichsam in den Verbindungsdurchgang 44 des Tunnelbodens 42 eingefädelt. Wenn die Werkstücke 12 dann durch den Trockentunnel und den Kühltunnel 24 gefördert werden, bewegt sich das Transportwagen-Fahrwerk 34 im Fahrraum 46 und führt die Befestigungseinrichtung 32 im Trockentunnel bzw. im Kühltunnel 24 mit sich, wobei sich die Verbindungseinrichtung 36, d.h. beim vorliegenden Ausführungsbeispiel die Gelenkstreben 40, durch den Verbindungsdurchgang 44 im Tunnelboden 42 hindurch erstreckt.

An dem Verbindungsdurchgang 44 sind nicht eigens gezeigte Abschirm- oder Dichtmittel vorgesehen, die ein Ausströmen der Tunnelatmosphäre nach unten zumindest erschweren bzw. verringern.

Die Figuren 1 und 3 bis 11 einerseits und Figur 2 andererseits veranschaulichen voneinander verschiedene Abwandlungen, bei denen der Fahrraum 46 unterschiedlich ausgebildet und angeordnet ist. Während sich der Fahrraum 46 bei der Variante nach Figur 2 vollständig unterhalb des Tunnelbodens 42 befindet, ragt der Fahrraum 46 bei den Varianten nach den Figuren 1 und 3 bis 11 von unten in den Tunnel hinein. Anders ausgedrückt hat der Tunnelboden 42 dort einen im Querschnitt gewinkelten Verlauf und ist der Verbindungsdurchgang 44 in einem Abschnitt dieses gewinkelten Tunnelbodens 42 vorhanden, der die Begrenzung des Fahrraums 46 nach oben definiert.

Der Kühltunnel 24 ist ergänzend zu seiner unteren Begrenzung durch den Tunnelboden 42 auf beiden Längsseiten durch seitliche Tunnelwände 48 und oben durch eine Tunneldecke 50 begrenzt. Die Tunneldecke 50 hat von der Mitte in Richtung auf die seitlichen Tunnelwände 48 einen gegenüber der Horizontalen nach unten geneigten Verlauf, so dass abgeschiedenes Kondensat zur Seite abfließt, wo sich hier nicht eigens gezeigte Ablaufrinnen befinden, über die dieses Kondensat abgeführt werden kann. In Figur 2 ist dieser geneigte Verlauf nicht gezeigt.

Die Kühlzone 22 umfasst in Längsrichtung an beiden Längsseiten des Kühltunnels 24 jeweils einen Versorgungsraum 52a bzw. 52b, die ihrerseits jeweils einen Eingangsraum 54 und einen Druckraum 56 umfassen. Der Druckraum 56 ist in seitlicher Richtung quer zur Längsrichtung 27 zwischen dem Kühltunnel 24 und dem Eingangsraum 54 angeordnet und durch eine der Tunnelwände 48 von dem Kühltunnel 24 getrennt. Zwischen dem Eingangsraum 54 und dem Druckraum 56 ist eine Zwischenwand 58 ausgebildet. In Figur 2 ist nur der Versorgungsraum 52a schematisch gezeigt. der Druckraum 56 erstreckt sich in Längsrichtung 27 weitgehend über die Länge des Kühltunnels 24.

In vertikaler Richtung erstrecken sich die Versorgungsräume 52a, 52b weitgehend über denselben Bereich, wie der Kühltunnel 24.

Beim vorliegenden Ausführungsbeispiel ist der Eingangsraum 54 von einem der beiden Versorgungsräume 52 ein Konditionierraum 60, der in Förderrichtung 27 in einen Ansaugbereich 62, einen Aggregatbereich 64 und einen Abgabebereich 66 unterteilt ist, welche strömungstechnisch miteinander verbunden sind. Dieser Versorgungsraum ist mit 52a bezeichnet, der gegenüberliegende Versorgungsraum trägt das Bezugszeichen 52b.

Der Ansaugbereich 62 ist mit einem Zuluftkanal 68 verbunden, über welchen dem Ansaugbereich 62 Luft, insbesondere Außenluft, zugeführt werden kann. Gegebenenfalls wird die Außenluft vor ihrem Einströmen in den Ansaugbereich 62 des Versorgungsraumes 52a durch eine vorgeschaltete Konditioniereinrichtung vorkonditioniert, in welcher beispielsweise bereits eine Reinigung/Filterung erfolgt und/oder eine Ent- oder Befeuchtung stattfindet.

Dem Kühltunnel 24 ist eine Kühlluft-Temperiereinrichtung 70 zugeordnet, mittels welcher temperierte Kühlluft erzeugt wird, die in der Regel eine Temperatur zwischen 20°C und 40°C hat und dem Kühltunnel 24 zugeführt wird Die Kühlluft-Temperiereinrichtung 70 ist in dem Versorgungsraum 52a angeordnet. Beim vorliegenden Ausführungsbeispiel ist die Kühlluft-Temperiereinrichtung 70 in dem Eingangsraum 54 angeordnet und dort in dem Aggregatbereich 64 untergebracht und eingangsseitig mit dem Ansaugbereich 62 verbunden. Die Ausgangsseite der Kühlluft-Temperiereinrichtung 70 ist strömungstechnisch mit dem Druckraum 56 verbunden; diese Verbindung erfolgt über ein Gebläse 72 und dem Abgabebereich 66. Durch das Gebläse 72 wird die Außenluft aus dem Ansaugbereich 62 durch die Kühlluft-Temperiereinrichtung 70 hindurch und hiernach als temperierte Kühlluft in den Abgabebereich 66 gefördert, von wo sie in den Druckraum 56 einströmt. Allgemein ausgedrückt, wird Luft durch das Gebläse 72 zur Kühlluft-Temperiereinrichtung 70, durch die Kühlluft-Temperiereinrichtung 70 hindurch und hiernach als temperierte Kühlluft zu dem Kühlraum 24 gefördert.

Beim vorliegenden Ausführungsbeispiel ist das Gebläse 72 ebenfalls in dem Aggregatbereich 64 und stromab der der Kühlluft-Temperiereinrichtung 70 angeordnet. Bei einer Abwandlung kann das Gebläse 72 aber auch außerhalb des Aggregatbereichs 64 und/oder stromauf der Kühlluft-Temperiereinrichtung 70 vorgesehen sein. Bei einer weiteren Alternative kann auch jeweils ein Gebläse 72 stromauf und ein Gebläse 72 stromab der Kühlluft-Temperiereinrichtung 70 vorhanden sein.

Die Kühlluft-Temperiereinrichtung 70 ist in der Lage, die Luft auf eine gewünschte Kühltemperatur zu temperieren, mit welcher die Luft in den Kühltunnel 24 eingeblasen werden soll. Abhängig von der Ausgangstemperatur der Außenluft wird diese hierfür abgekühlt oder erwärmt.

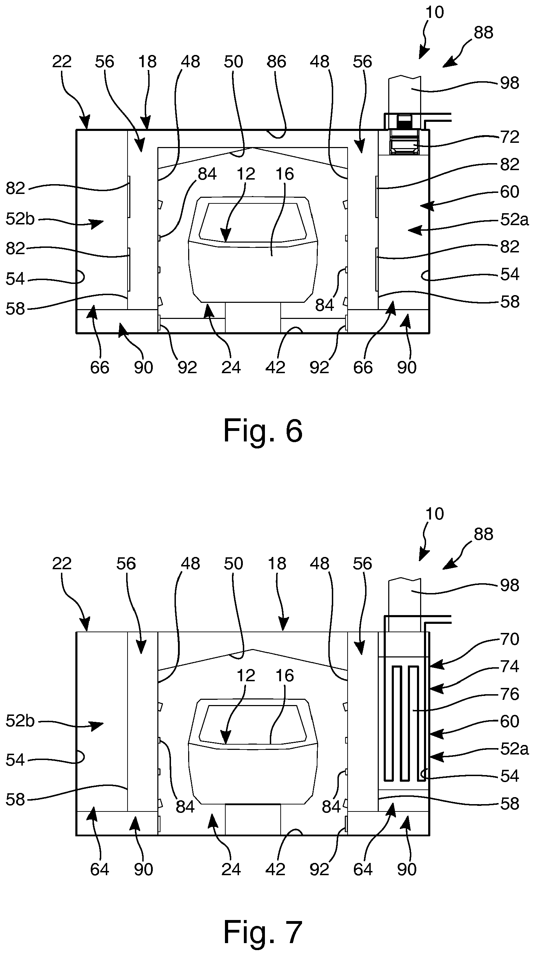

In der Praxis umfasst die Kühlluft-Temperiereinrichtung 70 eine Wärmetauscheranordnung 74. Beim vorliegenden Ausführungsbeispiel umfasst die Kühlluft-Temperiereinrichtung 70 einen Warmwasser-Wärmetauscher 76 und einen diesem in Strömungsrichtung nachgeschalteten Kaltwasser-Wärmetauscher 78, welche in an und für sich bekannter Art und Weise betriebsmäßig kombiniert werden, um die durchströmende Außenluft auf die benötigte Kühltemperatur zu temperieren und abhängig von der Ausgangstemperatur sowohl eine Erwärmung als auch eine Abkühlung der Luft zu ermöglichen. Figur 7 zeigt einen Querschnitt mit Blick auf den Warmwasser-Wärmetauscher 76.

Die Wärmetauscheranordnung 74 kann alternativ auch als kombinierter Wärmetauscher für Heiß- und Kaltwasser ausgebildet sein, bei dem in an und für sich bekannter Art und Weise automatisch zwischen einer Heißwasser- und einer Kaltwasserspeisung umgeschaltet wird. Wie eingangs erwähnt, können bei der Wärmetauscheranordnung 74 anstelle von Wasser auch andere fluide Wärmeträger verwendet werden; die Begriffe Warmwasser-Wärmetauscher und Kaltwasser-Wärmetauscher stehen lediglich für die jeweilige Temperierwirkung.

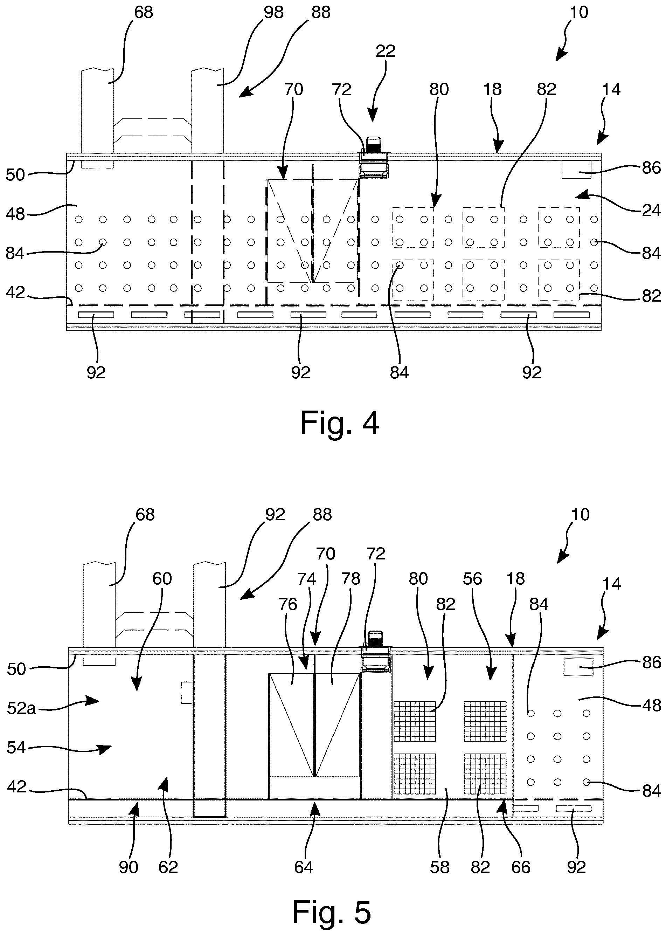

In dem Bereich zwischen dem Abgabebereich 66 des Konditionierraumes 60 und dem Druckraum 56 definiert die Zwischenwand 58 eine durchströmbare Filterwand 80, die den Abgabebereich 66 strömungstechnisch mit dem Druckraum 56 verbindet und in Figur 5 in Draufsicht zu erkennen ist. Die Filterwand 80 umfasst eine oder mehrere durchströmbare Filtereinheiten 82, die beispielsweise in Form von Vliesmatten oder dergleichen vorliegen können. Durch das Gebläse 72 strömt die temperierte Kühlluft durch die Filterwand 80 hindurch in den Druckraum 56.

Die seitlichen Tunnelwände 48 weisen eine Vielzahl von Einblasdüsen 84 auf, welche den Druckraum 56 strömungstechnisch mit dem Kühltunnel 24 verbinden und von denen in den Figuren nicht alle ein Bezugszeichen tragen. Der Schnitt nach Figur 4 zeigt die Einblasdüsen 84 in einer Draufsicht, wobei die Kühlluft-Temperiereinrichtung 70 und die Filterwand 80 in Durchsicht zu erkennen sind. Die Einblasdüsen 84 bilden Strömungsdurchgänge durch die seitlichen Tunnelwände 48. Die Richtung, in welcher eine jeweilige Einblasdüse 84 die Kühlluft aus dem Druckraum 56 in den Kühltunnel 24 hinein und auf die zu kühlenden Werkstücke 12 abgibt, kann einstellbar sein. Hierzu können die Einblasdüsen 84 beispielsweise einen inneren Teil haben, der als Kugelkalotte ausgebildet und in der seitlichen Tunnelwand 48 gelagert ist, so dass die Ausrichtung der Einblasdüse 84 verändert werden kann.

Wie in den Figuren 3 und 6 zu erkennen ist, ist der Druckraum 56, der mit dem Konditionierraum 60 verbunden ist, über einen Verbindungskanal 86 mit dem Druckraum 56 strömungstechnisch verbunden, der zu dem Versorgungsraum 52b auf der gegenüberliegenden Seite des Kühltunnels 24 gehört. Der Verbindungskanal 86 ist nahe am Ausgang des Kühltunnels 24 angeordnet und überspannt beim vorliegenden Ausführungsbeispiel den Kühltunnel 24. Bei nicht eigens gezeigten Abwandlungen können auch mehrere Verbindungskanäle 86 vorhanden sein, so dass zwischen den beiden Verteilerräume 56 der Versorgungsräume 52a und 52b in Längsrichtung des Kühltunnels 24 mehrere Strömungswege ausgebildet sind.

Bei einer Abwandlung kann der Verbindungskanal 86 auch den Abgaberaum 56 des Versorgungsraumes 52a mit dem Eingangsraum 54 des Versorgungsraumes 52b verbinden, wobei dann dort in der Zwischenwand 58 Filtereinheiten 82 angeordnet sind. Diese Variante ist in Figur 3 durch gestrichelte Verlängerungen des Verbindungskanals 86 und entsprechende Filtereinheiten 82 in der Zwischenwand 58 angedeutet.

Die Figuren 1, 3, 4 und 8 veranschaulichen eine Ablufteinrichtung 88 der Kühlzone 22, mit welcher die Tunnelatmosphäre als Abluft aus dem Kühltunnel 24 abgeführt werden kann. Die Ablufteinrichtung 88 umfasst einen Sammelkanal 90, der sich unterhalb des Versorgungsraumes 52a parallel zum Kühltunnel 24 und weitgehend über dessen gesamte Länge erstreckt. Der Sammelkanal 90 kann aber auch nur entlang eines Abschnitts des Kühltunnels 24 vorgesehen sein. Der Sammelkanal 90 ist durch mehrere Absaugdurchgänge 92 mit dem Kühltunnel 24 verbunden, so dass die Tunnelatmosphäre als Abluft aus dem Bodenbereich des Kühltunnels 24 abgesaugt werden kann. Im Einlaufbereich des Kühltunnels 24 ist außerdem ein Absaugkanal 94 an der Tunneldecke 50 ausgebildet, der den Kühltunnel 24 quer zur Förderrichtung 27 überspannt und ebenfalls über mehrere Absaugdurchgänge 92 mit dem Kühltunnel 24 verbunden ist, so dass dort Abluft aus dem Deckenbereich des Kühltunnels 24 abgesaugt werden kann, um Kondensatbildung an der Tunneldecke 50 zu vermeiden.

Der Sammelkanal 90 ist mit einem Abluftkanal 98 verbunden, über welchen die abgesaugte Abluft von dem Trockner 14 abgeführt werden kann. Wie die Figuren 4 und 5 veranschaulichen, kann der Abluftkanal 98 mit dem Zuluftkanal 68 verbunden sein, so dass der Zuluft im Zuluftkanal 68 Abluft aus dem Kühltunnel 24 zugemischt werden kann, so dass Abluft zumindest teilweise in einem Kreislauf umgewälzt wird. Der Anteil der Abluft, der in den Zuluftkanal 68 strömt, kann mit Hilfe eines nicht eigens gezeigten Ventils eingestellt werden. Gegebenenfalls kann ein Zuströmen von Außenluft durch ein entsprechendes Ventil auch unterbunden werden, so dass nur umgewälzte Abluft in den Ansaugbereich 62 des Konditionierraumes 60 einströmt.

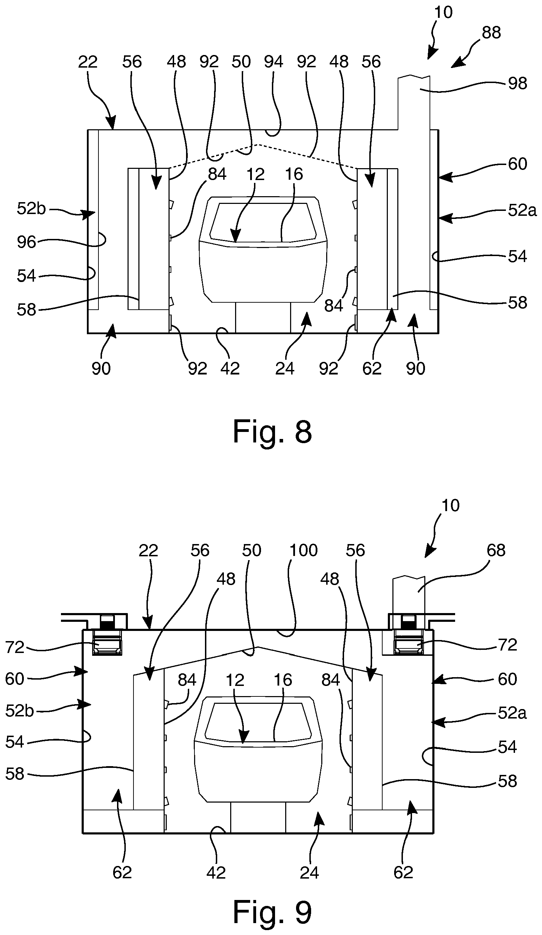

Figur 8 veranschaulicht eine ergänzende Alternative, bei welcher sich auch unterhalb des Versorgungsraumes 52b auf der gegenüberliegenden Seite des Kühltunnels 24 ein Sammelkanal 90 mit Absaugdurchgängen 92 erstreckt, der über eine Strömungsleitung 96 mit dem Absaugkanal 94 an der Tunneldecke 50 verbunden ist. Auf diese Weise wird in Längsrichtung des Kühltunnels 24 auf beiden Seiten am Boden Tunnelluft abgesaugt und zu dem Sammelkanal 90 unter dem Versorgungsraum 52a und weiter in den Abluftkanal 94 geführt. Es können auch ein oder mehrere Verbindungskanäle zwischen den beiden Sammelkanälen 90 auf beiden Seiten des Kühltunnels 24 vorhanden sein, um die Abluft von der Seite des Versorgungsraumes 52b zum Sammelkanal 90 unter dem Versorgungskanal 52a und weiter in den Abluftkanal 98 zu überführen.

Figur 9 veranschaulicht eine Abwandlung, bei welcher die Versorgungsräume 52a und 52b zu beiden Seiten der Kühlzone 22 analog aufgebaut sind. In diesem Fall ist also der Versorgungsraum 52b wie der Versorgungsraum 52 ausgebildet und mit den entsprechenden Komponenten bestückt, so dass beide Versorgungsräume 52a, 52b als Konditionierräume 60 konzipiert sind. Figur 9 zeigt einen Querschnitt auf Höhe der gegenüberliegenden Ansaugbereiche 62 der jeweiligen Konditionierräume 60 der Versorgungsräume 52a und 52b. Exemplarisch sind dort in beiden Ansaugbereichen 62 auch Gebläse 72 vorhanden, welche anstelle der Gebläse 72 stromab der Kühlluft-Temperiereinrichtung 70 vorhanden sein oder diese ergänzen können.

Wenn mehrere Gebläse 72 vorhanden sind, können diese mit Frequenzumformern und Volumenstrommesseinrichtungen ausgestattet sein, so dass für unterschiedliche Arten von Gegenständen 12, insbesondere für verschiedene Fahrzeugkarosserien 16 angepasste Einblasgeschwindigkeiten der temperierten Kühlluft in den Kühltunnel 24 realisiert werden können. Gegebenenfalls können im Druckraum 56 ergänzende Heizregister angeordnet sein, so dass in Längsrichtung 27 ein Temperaturgradient der Kühlluft erzeugt werden kann, so dass eine langsame und besonders spannungsarme Abkühlung erfolgen kann.

Beide Versorgungsräume 52a und 52b können mit jeweils einem gesonderten Zuluftkanal 68 und Abluftkanal 98 verbunden sein. Figur 9 zeigt diejenige Alternative, bei welcher nur ein Zuluftkanal 68 vorhanden ist, durch den die Außenluft in den Ansaugbereich 62 des Versorgungsraumes 52a gelangt. Der Ansaugbereich 62 des Versorgungsraumes 52a ist über einen Zuluftverbindungskanal 100 mit dem Ansaugbereich 62 des Versorgungsraumes 52b verbunden.

Bei dem Ausführungsbeispiel nach den Figuren 1 und 3 bis 8 wird der Eingangsraum 54 des Versorgungsraumes 52b nicht für den Strömungsweg der Kühlluft genutzt, sondern bringt lediglich den Absaugkanal 94 unter, sofern eine Strömungsverbindung zwischen zwei Sammelkanälen 90 auf beiden Seiten des Kühltunnels 24 vorgesehen ist.

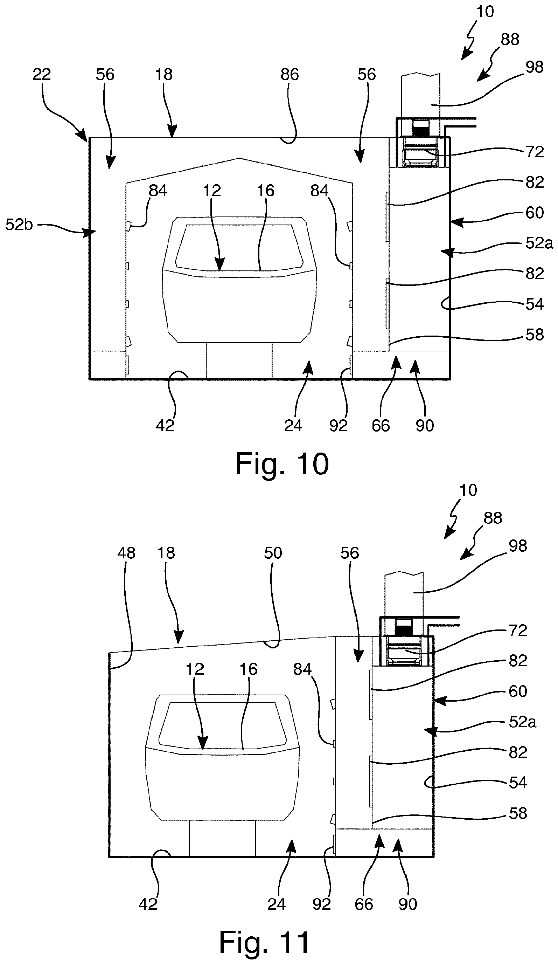

Gegebenenfalls kann daher der Eingangsraum 54 beim Versorgungsraum 52b entfallen, so dass der Versorgungsraum 52b lediglich den dortigen Druckraum 56 umfasst. Dieses Ausführungsbeispiel veranschaulicht Figur 10 mit einem Querschnitt, welcher dem Querschnitt von Figur 6 entspricht.

Figur 11 veranschaulicht eine Variante, bei welcher nur auf einer Seite des Kühltunnels 24 ein Versorgungsraum 52 vorhanden ist, auf der gegenüberliegenden Seite gibt es keinen Versorgungsraum. Daher ist dort auch kein Druckraum 56 und sind in der gegenüberliegenden seitlichen Tunnelwand 48 auch keine Einblasdüsen 84 vorhanden. Die Kühlluft gelangt aus dem Abgabebereich 66 des Konditionierraumes 60 nur von einer Seite her in den Kühltunnel 24.

Lediglich anhand Figur 1 ist gezeigt, dass die Kühlzone 22 des Trockners 14 modular durch mehrere Kühlzonenmodule 102 aufgebaut sein kann, welche jeweils ein Modulgehäuse 104 aufweisen, in dem jeweils ein Modultunnel 106 untergebracht ist. Die Modultunnel 106 der hintereinander angeordneten Kühlzonenmodule 102 bilden den Kühltunnel 24 des Trockners 14, d.h. jeder Modultunnel 106 eines Kühlzonenmoduls 102 definiert einen Abschnitt des Kühltunnels 24, wobei jeder, hier nicht gesondert bezeichneter Modulboden einen Abschnitt des Verbindungsdurchgangs 44 des resultierenden Tunnelbodens 42 vorgibt. Entsprechend definieren die hier ebenfalls nicht gesondert bezeichneten Seitenwände und Decke des Modultunnels 106 jeweils einen Abschnitt der seitlichen Tunnelwände 48 und der Tunneldecke 50 der resultierenden Kühlzone 22. Die Kühlzonenmodule 102 sind innerhalb des Querschnittes der Kühlzone 22 des Trockners 14 angeordnet. Vorzugsweise sind die Kühlzonenmodule 102 auch innerhalb des Querschnitts des Trockners 14 insgesamt angeordnet. Jedes Kühlzonenmodul 102 definiert in entsprechender Weise jeweils einen Abschnitt des oder der Versorgungsräume 52a bzw. 52b und deren Eingangsräume 54 und Verteilerräume 56 und jeweils einen Abschnitt der Zwischenwand 58.

Beim vorliegenden Ausführungsbeispiel umfasst die Kühlzone 22 drei Kühlzonenmodule 102, von denen ein erstes Kühlzonenmodul 102 ein Ansaugmodul 102.1 mit dem Ansaugbereich 62 des oder der Versorgungsräume 52 definiert, ein zweites Kühlzonenmodul 102 definiert ein Aggregatmodul 102.2 mit dem Aggregatbereich 64 des oder der Versorgungsräume 52 und ein drittes Kühlzonenmodul 102 definiert ein Abgabemodul 102.3 mit dem Abgabebereich 66 des oder der Versorgungsräume 52, so dass sich der Eingangsraum 54 dadurch ergibt, dass die drei Kühlzonenmodule 102.1, 102.2 und 102.3 hintereinander angeordnet und betriebsmäßig miteinander verbunden werden.

Ein solches Kühlzonenmodul 102 kann vorliegend als Baueinheit vormontiert sein, so dass der Trockner 14 bzw. dessen Kühlzone 22 an dem Betriebsort durch Zusammenfügen der vormontierten Kühlzonenmodule 102 zusammengefügt werden kann. Alternativ kann ein Kühlzonenmodul 102 auch erst bei der Installation des Trockners 14 bzw. der Kühlzone 102 entstehen.

Bei vormontierten Kühlzonenmodulen 102 sind diese mit zueinander komplementären Anschlüssen für Fluidleitungen und elektrische Leitungen ausgestattet, die als Betriebsmittel für den Betrieb des Trockners 14 bzw. der Kühlzone 22 zur Verfügung stehen müssen.

Sowohl der Zuluftkanal 68 als auch der Abluftkanal 98 können auch an anderen Positionen entlang der Kühlzone 22 angeordnet sein und müssen auch keinen vertikalen Verlauf haben, wie es die Figuren skizzieren. Die konkrete Lage und der konkrete Verlauf der Kanäle hängen unter anderem von den örtlichen Gegebenheiten ab.

## Patentansprüche

1. Temperiervorrichtung zum Temperieren, insbesondere zum Trocknen, von Gegenständen (12), insbesondere von Fahrzeugkarosserien (16), mit
a) einem Gehäuse (18), in dem eine Kühlzone (22) mit einem Kühlraum (24) untergebracht ist, der eine Längsrichtung (27) definiert;
wobei
b) dem Kühlraum (24) wenigstens eine Kühlluft-Temperiereinrichtung (70) zugeordnet ist, mittels welcher temperierte Kühlluft erzeugbar ist, die dem Kühlraum (24) zuführbar ist,
**dadurch gekennzeichnet, dass**
c) die Kühlzone (22) in Längsrichtung an einer Längsseite des Kühlraumes (24) einen Versorgungsraum (52a, 52b) umfasst, in dem die Kühlluft-Temperiereinrichtung (70) angeordnet ist.

2. Vorrichtung nach Anspruch 1, **dadurch gekennzeichnet, dass** der Versorgungsraum (52a, 52b) einen Konditionierraum (60) und einen damit strömungstechnisch verbundenen Druckraum (56) umfasst, wobei die Kühlluft-Temperiereinrichtung (70) in einem Aggregatbereich (64) des Konditionierraums (60) angeordnet und an ihrer Ausgangsseite strömungstechnisch mit dem Druckraum (56) verbunden ist, wobei der Druckraum (56) zwischen dem Kühlraum (24) und dem Konditionierraum (60) angeordnet ist und durch eine oder mehrere Einblasdüsen (84) strömungstechnisch mit dem Kühlraum (24) verbunden ist.

3. Vorrichtung nach Anspruch 2, **dadurch gekennzeichnet, dass** der Konditionierraum (60) einen Ansaugbereich (62) umfasst, mit dem die Eingangsseite der Kühlluft-Temperiereinrichtung (70) strömungstechnisch verbunden ist und dem Luft zuführbar ist.

4. Vorrichtung nach Anspruch 2 oder 3, **dadurch gekennzeichnet, dass** zwischen dem Konditionierraum (60) und dem Druckraum (56) eine oder mehrere Filtereinheiten (82) angeordnet sind, die von der temperierten Kühlluft durchströmbar sind.

5. Vorrichtung nach einem der Ansprüche 2 bis 4, **dadurch gekennzeichnet, dass** der Konditionierraum (60) einen Abgabebereich (66) umfasst, mit dem die Ausgangsseite der Kühlluft-Temperiereinrichtung (70) verbunden ist und der insbesondere durch eine Filterwand (80), welche eine oder mehrere Filtereinheiten (82) umfasst, von dem Druckraum (56) getrennt ist.

6. Vorrichtung nach einem der Ansprüche 2 bis 5, **dadurch gekennzeichnet, dass** der Druckraum (56) sich in Längsrichtung (27) weitgehend über die Länge des Kühlraumes (24) erstreckt.

7. Vorrichtung nach einem der Ansprüche 1 bis 6, **dadurch gekennzeichnet, dass** in dem Versorgungsraum (52a, 52b) wenigstens ein Gebläse (72) angeordnet ist, durch welches Luft zur Kühlluft-Temperiereinrichtung (70), durch die Kühlluft-Temperiereinrichtung (70) hindurch und hiernach als temperierte Kühlluft in den Kühlraum (24) förderbar ist.

8. Vorrichtung nach einem der Ansprüche 1 bis 7, **dadurch gekennzeichnet, dass** die Kühlluft-Temperiereinrichtung (70) eine Wärmetauscheranordnung (74) umfasst.

9. Vorrichtung nach Anspruch 8, **dadurch gekennzeichnet, dass** die Wärmetauscheranordnung (74) einen Heißwasser-Wärmetauscher (76) und einen Kaltwasser-Wärmetauscher (78) umfasst oder als kombinierter Wärmetauscher für Heißwasser und Kaltwasser ausgebildet ist.

10. Vorrichtung nach einem der Ansprüche 1 bis 9, **dadurch gekennzeichnet, dass** der Kühlraum (24) mit Hilfe von einem oder mehreren Kühlzonenmodulen (102) aufgebaut ist, von denen wenigstens eines als Aggregatmodul (102.2), in dem die Kühlluft-Temperiervorrichtung (70) unterbringbar ist, und/oder wenigstens eines als Abgabemodul (102.3) mit dem Abgabebereich (66) nach Anspruch 5 und/oder wenigstens eines als Ansaugmodul (102.1) mit dem Ansaugbereich (62) nach Anspruch 3 ausgebildet ist.

11. Vorrichtung nach einem der Anspruche 1 bis 10, **dadurch gekennzeichnet, dass** auf beiden Seiten des Kühlraumes (24) ein Versorgungsraum (52a, 52b) nach einem der Ansprüche 1 bis 9 ausgebildet ist.
